(19) Europäisches Patentamt
European Patent Office
Office européen des brevets

(11) **EP 1 363 378 B1**

(12) **EUROPÄISCHE PATENTSCHRIFT**

(45) Veröffentlichungstag und Bekanntmachung des Hinweises auf die Patenterteilung:
**27.05.2015  Patentblatt 2015/22**

(21) Anmeldenummer: **03090072.4**

(22) Anmeldetag: **17.03.2003**

(51) Int Cl.:
*H02H 3/20* (2006.01)      *H02H 3/087* (2006.01)
*H02J 1/14* (2006.01)       *H02H 3/18* (2006.01)
*H02J 7/14* (2006.01)

(54) **Verfahren und Vorrichtung zur Kurzschlusserkennung und zum Überspannungsschutz in Zweispannungsbordnetzen**

Method and apparatus for short circuit detection and for overvoltage protection for a dual-voltage electric system

Procédé et dispositif de détection de court-circuit et pour protection contre les surtensions pour réseaux de bord bitension

(84) Benannte Vertragsstaaten:
**AT BE BG CH CY CZ DE DK EE ES FI FR GB GR HU IE IT LI LU MC NL PT RO SE SI SK TR**

(30) Priorität: **13.05.2002   DE 10221248**

(43) Veröffentlichungstag der Anmeldung:
**19.11.2003   Patentblatt 2003/47**

(73) Patentinhaber: **Volkswagen Aktiengesellschaft**
**38440 Wolfsburg (DE)**

(72) Erfinder:
• **Wistrach, Michael**
**38126 Braunschweig (DE)**

• **Zawade, Torsten**
**31228 Peine (DE)**
• **Just, Norbert**
**38440 Wolfsburg (DE)**

(74) Vertreter: **Patentanwälte Bressel und Partner mbB**
**Potsdamer Platz 10**
**10785 Berlin (DE)**

(56) Entgegenhaltungen:
**DE-A1- 10 028 748     DE-A1- 19 961 435**

**Beschreibung**

Die Erfindung betrifft ein Verfahren und eine Vorrichtung zur Kurzschlusserkennung und zum Überspannungsschutz zwischen zwei Spannungsebenen eines Zweispannungsbordnetzes.

Aus der DE 199 61 435 A1 ist eine Vorrichtung zum Überspannungsschutz in Zweispannungsbordnetzen bekannt, die ein unterschiedliches Spannungsniveau aufweisen, wobei in mindestens einem Zweig des Bordnetzes auf dem höheren Spannungsniveau ein Schaltelement angeordnet ist und im Bordnetz auf dem niedrigeren Spannungsniveau eine Spannungsmesseinheit angeordnet ist, wobei das Schaltelement durch die Spannungsmesseinheit schaltbar ist.

Der Erfindung liegt das technische Problem zugrunde, ein Verfahren und eine Vorrichtung zum sicheren Erkennen eines Kurzschlusses und zum Überspannungsschutz zwischen zwei Spannungsebenen eines Zweispannungsbordnetzes zu realisieren.

Die Lösung des technischen Problems ergibt sich durch die Gegenstände mit den Merkmalen der Patentansprüche 1 und 10. Weitere vorteilhafte Ausgestaltungen der Erfindung ergeben sich aus den Unteransprüchen.

Hierzu erfasst die Messeinrichtung vorzeichengerecht den in die Verbraucherzweige fließenden Strom I1. Anhand des Vorzeichenwechsels des Stromes I1 kann dann zuverlässig auf einen Kurzschluss zwischen den beiden Bordnetzen geschlossen werden. Der Erfindung liegt dabei die Erkenntnis zugrunde, dass es Kurzschlüsse geben kann, die nur schwierig bzw. gar nicht mittels einer reinen Spannungsmessung erfassbar sind. Existieren beispielsweise zwischen der Messeinrichtung und dem Ort des Kurzschlusses sehr lange Zuleitungen, so ist aufgrund des extrem großen Kurzschlussstromes der Spannungsabfall über der Zuleitung nicht mehr vernachlässigbar. Somit ist es möglich, dass die Überspannung auf einen Wert gesunken ist, der von der Spannungsmesseinheit nicht mehr zuverlässig als kurzschlussbedingte Überspannung identifizierbar ist. Dieses Problem wird jedoch durch die Strommessung gelöst, da unabhängig von dem Spannungsabfall über der Zuleitung der Strom durch die Messeinrichtung fließen muss. Diese Stromrichtung ist jedoch umgekehrt zu der Stromrichtung im Nennbetrieb, sodass ein Kurzschluss zuverlässig detektierbar ist.

Die Messeinrichtung kann dabei den Strom I1 direkt messen oder aber die Ströme aus dem Entkopplungsglied und der Spannungsquelle messen und daraus den Strom I1 berechnen. Die direkte Messung ist einfacher und genauer, jedoch muss eine separate Messeinrichtung in dem Bordnetz angeordnet werden. Verfügen hingegen das Entkopplungsglied und die Spannungsquelle bereits über interne Strommesseinrichtungen, so wird vorzugsweise auf diese zurückgegriffen, wobei jedoch die Ströme ebenfalls vorzeichengerecht gemessen werden müssen.

In einer bevorzugten Ausführungsform ist in allen sicherheitsunkritischen Zweigen des Bordnetzes auf dem höheren Spannungsniveau ein Schaltelement angeordnet, sodass gezielt nur einzelne Spannungszweige abgeschaltet werden müssen, in denen der Kurzschluss sich befindet.

In einer weiteren bevorzugten Ausführungsform ist in dem Bordnetz mit dem höheren Spannungsniveau ein zentrales Schaltelement angeordnet, mittels dessen das komplette Bordnetz auf dem höheren Spannungsniveau abschaltbar ist. Die Abschaltung erfolgt beispielsweise, wenn der Kurzschluss im Bordnetz mit dem höheren Spannungsniveau nicht eingrenzbar ist bzw. der Kurzschluss direkt an der Spannungsquelle liegt. Hier können gegebenenfalls zeitliche Verzögerungen für die Abschaltung vorgesehen werden, sodass die sicherheitsrelevanten Verbraucher noch in einen sicheren Betriebszustand überführt werden können.

In einer weiteren bevorzugten Ausführungsform ist das Entkopplungsglied als DC/DC-Wandler ausgebildet.

In einer weiteren bevorzugten Ausführungsform ist die Messeinrichtung oder eine ihr zugeordnete Auswerteeinrichtung über eine separate Steuerleitung oder über ein Bussystem mit den Schaltelementen verbunden.

Die Schaltelemente sind vorzugsweise als Halbleiterschaltelemente oder Relais ausgebildet.

In einer weiteren bevorzugten Ausführungsform ist zusätzlich noch mindestens eine Spannungsmesseinheit in dem Bordnetz mit dem niedrigeren Spannungsniveau angeordnet. Insbesondere bei Verwendung mehrerer Spannungsmesseinheiten kann aufgrund der Höhe der Überspannungen der Ort des Kurzschlusses im Bordnetz mit der niedrigeren Spannung genau lokalisiert werden, was durch eine reine Stromumkehrmessung nicht möglich wäre.

Die Abschaltung der Verbraucherzweige im Bordnetz mit der höheren Spannung erfolgt vorzugsweise sukzessive, wenn ein Kurzschluss durch ein Vorzeichenwechsel des Stromes erfasst wird. Wird dann nach Abschaltung eines Verbraucherzweiges noch immer ein Kurzschluss erfasst, so wird vorzugsweise der abgeschaltete Verbraucherzweig erst wieder zugeschaltet, bevor der nächste Zweig abgeschaltet wird.

In einer weiteren bevorzugten Ausführungsform wird als weiteres Abschaltkriterium der Betrag der Stromstärke und/oder die zeitliche Länge des Vorzeichenwechsels berücksichtigt. Hierdurch wird die Erkennungssicherheit erhöht, da es insbesondere bei abgeschaltetem Entkopplungsglied durch Schaltvorgänge im Entkopplungsglied und/oder in den Verbrauchern zu Überspannungen und Entladeströmen kommen kann, die gegebenenfalls ebenfalls einen kurzzeitigen Vorzeichenwechsel des Stromes verursachen können. Allerdings sind diese nur sehr kurz und von geringer Höhe, sodass diese gut von einem statischen Kurzschluss unterscheidbar sind. Diese Berücksichtigung von Stromstärke und/oder zeitlicher Dauer erfolgt vorzugsweise direkt in der Messeinrichtung und der ihr zugeordneten Auswerteeinheit.

Anstelle einer sukzessiven Abschaltung einzelner Verbraucher können gleichzeitig auch ganze Gruppen von Spannungszweigen abgeschaltet werden, wobei dann die Spannungszweige wieder sukzessive zugeschaltet werden, bis wieder ein Kurzschluss erfasst wird. Dieses zuletzt geschlossene Schaltelement wird anschließend wieder geöffnet.

Sollte der Kurzschluss im Bordnetz mit dem höheren Spannungsniveau nicht lokalisierbar sein, so wird vorzugsweise das ganze Bordnetz über ein zentrales Schaltelement abgeschaltet.

Die Erfindung wird nachfolgend anhand eines bevorzugten Ausführungsbeispieles näher erläutert. Die einzige Figur zeigt ein schematisches Blockschaltbild eines Zweispannungsbordnetzes.

Das Zweispannungsbordnetz umfasst eine erste Spannungsquelle B1 mit einer Spannung U1 und eine zweite Spannungsquelle B2 mit einer Spannung U2, wobei U2 > U1 gilt. U1 beträgt beispielsweise 12 V und U2 36 oder 48 V. Zwischen den beiden Bordnetzen ist ein DC/DC-Wandler D1 angeordnet. In dem ersten Bordnetz mit der niedrigeren Spannung U1 sind erste Verbraucher R4, L1, C1 angeordnet, die in verschiedenen Spannungszweigen angeordnet sind. Zwischen der Spannungsquelle B1 und den Spannungszweigen der Verbraucher R4, L1, C1 ist eine Messeinrichtung M1 angeordnet, mittels derer vorzeichengerecht der Strom I1 gemessen wird. In dem zweiten Bordnetz mit der höheren Spannung U2 sind zweite Verbraucher R1 - R3 angeordnet, wobei der Verbraucher R3 einen sicherheitsrelevanten Verbraucher darstellt und beispielsweise Bestandteil einer elektromechanischen Bremsanlage ist. In den Spannungszweigen R1 und R2 ist jeweils ein Schaltelement S1, S2 angeordnet. Des weiteren ist zwischen der Spannungsquelle B2 und den Verbrauchern R1 - R3 ein weiteres Schaltelement S3 angeordnet. Zusätzlich kann der Spannungsquelle B2 ein nicht dargestellter Generator zugeordnet sein. Die beiden Spannungsquellen B1, B2 sind vorzugsweise als Batterien ausgebildet.

Im Normalbetrieb sind alle Schaltelemente S1 - S3 geschlossen und über den DC/DC-Wandler D1 wird die höhere Spannung U2 heruntertransformiert auf eine Spannung U1. Somit stellt der DC/DC-Wandler D1 einen Strom I3 zur Verfügung, der sich in einen Ladestrom I2 für die Spannungsquelle B1 und einen Bordnetzstrom I1 für die Verbraucher R4, L1, C1 aufteilt, wobei der Strom I1 kontinuierlich durch die Messeinrichtung M1 erfasst wird. Die Stromflussrichtung von I1 im Nennbetrieb ist in der Figur dargestellt. Lediglich bei der Abschaltung des DC/DC-Wandlers D1 kann es im Nennbetrieb zu einem Stromfluss in umgekehrter Richtung kommen, beispielsweise aufgrund von Entladungsvorgängen von Kapazitäten im Bordnetz.

Bei Vorhandensein eines Kurzschlusses zwischen den beiden Bordnetzen, der in der Figur zwischen den Verbrauchern R1 und R4 eingezeichnet ist, fließt ein hoher Strom aus der Spannungsquelle B2 über die Schalter S3, S1 und die Messeinrichtung M1 in die Spannungsquelle B1. Dieser Strom unterscheidet sich in der Stromrichtung von dem Nennstrom bei eingeschaltetem DC/DC-Wandler D1 bzw. von dem Nennstrom nach Beendigung der Ausgleichsvorgänge, die durch das Ausschalten des DC/DC-Wandlers D1 gestartet werden. Eine Unterscheidung der Ausgleichsströme zu dem Kurzschlussstrom ist leicht möglich, da diese sich sowohl hinsichtlich der Stromstärke als auch der Dauer stark unterscheiden. Dies kann leicht durch Definition von Schwellwerten bzw. Integriergliedern in der Messeinrichtung M1 verwirklicht werden.

Die Messeinrichtung M1 kann auch durch Strommessungen im DC/DC-Wandler D1 und von der Spannungsquelle B1 ersetzt werden, da sich aus diesen beiden Strömen I1 zu

$$I1 = - I2 - I3$$

ermitteln lässt. Dies hat den Vorteil, dass gegebenenfalls auf ohnehin vorhandene Messeinrichtungen im DC/DC-Wandler D1 bzw. der Spannungsquelle B1 zurückgegriffen werden kann. Diese beiden Ströme müssen dann in einer Auswerteeinheit entsprechend verknüpft werden.

Ist nun ein Kurzschluss aufgrund der Auswertung von I1 erfasst worden, so werden die Schaltelemente S1, S2 zunächst sukzessive geöffnet und wieder geschlossen, falls noch immer ein Kurzschluss erfasst wird. Im vorliegenden Fall wird beispielsweise zunächst nur das Schaltelement S2 geöffnet, wobei S1 geschlossen bleibt. Erfasst dann die Messeinrichtung M1 noch immer einen Kurzschlussstrom, so schließt S2 und S1 wird geöffnet. Erfasst dann die Messeinrichtung M1 keinen Kurzschlussstrom mehr, so bleibt S1 geöffnet. Die Schaltelemente können dabei als separate Schaltelemente in Stromverteilern bzw. Zuleitungen ausgebildet sein oder aber in die Verbraucher R1, R2 integriert sein. Diese Vorgehensweise hat den Vorteil, dass nur die defekten Spannungszweige abgeschaltet werden. Ein weiterer Vorteil ist, dass dadurch auch eine getrennte Absicherung, wie sie beispielsweise für die rechte und linke Seite der Fahrzeugbeleuchtung vorgesehen ist, realisierbar ist. Prinzipiell können jedoch auch einige Spannungszweige parallel durch Öffnen der Schaltelemente getrennt werden, wobei dann sukzessive die Schaltelemente wieder geschlossen werden, bis der Kurzschlussstrom wieder erfasst wird. In diesem Fall wird das zuletzt geschlossene Schaltelement wieder geöffnet und alle übrigen Schaltelemente geschlossen.

Sollte das sukzessive Öffnen und Schließen der Schaltelemente S1, S2 den Kurzschluss nicht lokalisieren, so kann über das Schaltelement S3 das komplette Bordnetz mit der höheren Spannung U2 abgeschaltet werden. Dabei werden vorzugsweise vor Abschaltung des kompletten Bordnetzes alle Schaltelemente geöffnet. Wird dann noch immer ein Kurzschlussstrom im anderen Bordnetz erfasst, so muss der Kurzschluss im Spannungszweig mit den sicherheitsrelevanten Verbrauchern R3 oder direkt an der Spannungsquelle B2 liegen.

Wie in der Figur dargestellt, erfolgt die Schaltung der Schaltelemente S1 - S3 durch die Messeinrichtung M1. Wird die Messeinrichtung M1 durch Messeinrichtungen im DC/DC-Wandler D1 und der Spannungsquelle B1 ersetzt, so erfolgt die Schaltung über eine die beiden Ströme verknüpfende Auswerteeinheit. Die Auswerteeinheit zu den Schaltelementen S1 - S3 erfolgt über separate Steuerleitungen oder über einen Datenbus, wie beispielsweise ein CAN-Bus.

**Patentansprüche**

1. Vorrichtung zur Kurzschlusserkennung und zum Überspannungsschutz zwischen zwei Spannungsebenen in Zweispannungsbordnetzen, die ein unterschiedliches Spannungsniveau aufweisen, wobei in mindestens einem Zweig des Bordnetzes auf dem höheren Spannungsniveau (U2) ein Schaltelement (S1 - S3) angeordnet ist und im Bordnetz auf dem niedrigeren Spannungsniveau (U1) mindestens eine Messeinrichtung angeordnet ist, in deren Abhängigkeit das Schaltelement (S1 - S3) schaltbar ist, **dadurch gekennzeichnet, dass** mittels der Messeinrichtung der in die Verbraucherzweige fließende Strom (11) vorzeichengerecht erfassbar ist.

2. Vorrichtung nach Anspruch 1, **dadurch gekennzeichnet, dass** mittels der Messeinrichtung (M1) der Strom (11) messbar ist.

3. Vorrichtung nach Anspruch 1, umfassend ein Entkopplungsglied zwischen den beiden Bordnetzen und mindestens eine Spannungsquelle (B1) in dem Bordnetz auf dem niedrigeren Spannungsniveau (U1), wobei mittels der Messeinrichtung der Strom (13) vom Entkopplungsglied und der Strom (12) der Spannungsquelle vorzeichengerecht gemessen wird.

4. Vorrichtung nach einem der vorangegangenen Ansprüche, **dadurch gekennzeichnet, dass** in allen sicherheitsunkritischen Zweigen des Bordnetzes auf dem höheren Spannungsniveau (U2) ein Schaltelement (S1 - S2) angeordnet ist.

5. Vorrichtung nach einem der vorangegangenen Ansprüche, **dadurch gekennzeichnet, dass** in dem Bordnetz mit dem höheren Spannungsniveau (U2) ein zentrales Schaltelement (S3) zur Abschaltung des Bordnetzes angeordnet ist.

6. Vorrichtung nach einem der vorangegangenen Ansprüche, **dadurch gekennzeichnet, dass** das Entkopplungsglied als DC/DC-Wandler (D1) ausgebildet ist.

7. Vorrichtung nach einem der vorangegangenen Ansprüche, **dadurch gekennzeichnet, dass** die Messeinrichtung (M1) oder eine ihr zugeordnete Auswerteeinrichtung über eine separate Steuerleitung oder über ein Bussystem mit den Schaltelementen (S1 - S3) verbunden ist.

8. Vorrichtung nach einem der vorangegangenen Ansprüche, **dadurch gekennzeichnet, dass** die Schaltelemente (S1 - S3) als Halbleiterschaltelemente und/oder als Relais ausgebildet sind.

9. Vorrichtung nach einem der vorangegangenen Ansprüche, **dadurch gekennzeichnet, dass** die Vorrichtung zusätzlich mindestens eine Spannungsmesseinheit umfasst.

10. Verfahren zur Kurzschlusserkennung und zum Überspannungsschutz zwischen zwei Spannungsebenen in Zweispannungsbordnetzen, die ein unterschiedliches Spannungsniveau aufweisen, umfassend folgende Verfahrensschritte:

    a) Ermitteln des in die Verbraucheranzeige des Bordnetzes mit dem niedrigeren Spannungsniveau (U1) fließenden Stromes (11),
    b) Abschalten von Spannungszweigen im Bordnetz mit dem höheren Spannungsniveau (U2), wenn im Bordnetz mit dem niedrigeren Spannungsniveau der Strom (11) sein Vorzeichen wechselt.

11. Verfahren nach Anspruch 10, **dadurch gekennzeichnet, dass** das als weiteres Abschaltkriterium der Betrag der Stromstärke und/oder die zeitliche Länge des Vorzeichenwechsels des Stromes (I1) berücksichtigt wird.

12. Verfahren nach Anspruch 10 oder 11, **dadurch gekennzeichnet, dass** der Strom (11) gemessen wird.

13. Verfahren nach Anspruch 10 oder 11, **dadurch gekennzeichnet, dass** der Strom (12) aus einer Spannungsquelle (B1) und der Strom (13) aus einem Entkopplungsglied zwischen den Bordnetzen gemessen wird.

14. Verfahren nach einem der Ansprüche 10 bis 13, **dadurch gekennzeichnet, dass** die Spannungszweige sukzessive abgeschaltet werden, bis kein Vorzeichenwechsel des Stromes (I1) mehr erfasst wird.

15. Verfahren nach Anspruch 14, **dadurch gekenn-**

**zeichnet, dass** ein abgeschalteter Spannungszweig wieder zugeschaltet wird, falls nach dessen Abschaltung der Strom (11) nicht sein Vorzeichen wechselt.

16. Verfahren nach Anspruch 15, **dadurch gekennzeichnet, dass** der abgeschaltete Spannungszweig wieder zugeschaltet wird, bevor der nächste Spannungszweig abgeschaltet wird.

17. Verfahren nach einem der Ansprüche 10 bis 16, **dadurch gekennzeichnet, dass** bestimmte Spannungszweige gleichzeitig abgeschaltet werden und sukzessive wieder zugeschaltet werden.

18. Verfahren nach einem der Ansprüche 10 bis 17, **dadurch gekennzeichnet, dass** bei mangelnder Lokalisierung des Kurzschlusses das gesamte Bordnetz mit der höheren Spannung (U2) abgeschaltet wird.

**Claims**

1. Apparatus for short-circuit detection and for overvoltage protection between two voltage levels in dual-voltage electric systems which have a different voltage level, wherein a switching element (S1 - S3) is arranged in at least one branch of the electric system at the higher voltage level (U2) and at least one measuring device is arranged in the electric system at the lower voltage level (U1), on the basis of which the switching element (S1 - S3) can be switched, **characterized in that** the current (I1) flowing in the consumer branches can be detected with the correct mathematical sign using the measuring device.

2. Apparatus according to Claim 1, **characterized in that** the current (I1) can be measured using the measuring device (M1).

3. Apparatus according to Claim 1, comprising a decoupling member between the two electric systems and at least one voltage source (B1) in the electric system at the lower voltage level (U1), wherein the current (13) from the decoupling member and the current (12) of the voltage source is measured with the correct mathematical sign by the measuring device.

4. Apparatus according to any of the preceding claims, **characterized in that** a switching element (S1 - S2) is arranged in all branches of the electric system at the higher voltage level (U2) which are not safety-critical.

5. Apparatus according to any of the preceding claims, **characterized in that** a central switching element (S3) for disconnecting the electric system is arranged in the electric system at the higher voltage level (U2).

6. Apparatus according to any of the preceding claims, **characterized in that** the decoupling member is designed as a DC-to-DC converter (D1).

7. Apparatus according to any of the preceding claims, **characterized in that** the measuring device (M1) or an evaluation device associated therewith is connected to the switching elements (S1 - S3) via a separate control line or a bus system.

8. Apparatus according to any of the preceding claims, **characterized in that** the switching elements (S1 - S3) are designed as semiconductor switching elements and/or as relays.

9. Apparatus according to any of the preceding claims, **characterized in that** the apparatus additionally comprises at least one voltage measuring unit.

10. Method for short-circuit detection and for overvoltage protection between two voltage levels in dual-voltage electric systems which have a different voltage level, said method comprising the following method steps:

a) calculating the current (I1) flowing in the consumer branches of the electric system at the lower voltage level (U1),
b) disconnecting voltage branches in the electric system at the higher voltage level (U2) if the mathematical sign of the current (I1) changes in the electric system at the lower voltage level.

11. Method according to Claim 10, **characterized in that** the magnitude of the current strength and/or the temporal length of the change in the mathematical sign of the current (I1) is taken into account as further disconnection criterion.

12. Method according to Claim 10 or 11, **characterized in that** the current (I1) is measured.

13. Method according to Claim 10 or 11, **characterized in that** the current (12) from a voltage source (B1) and the current (13) from a decoupling member is measured between the electric systems.

14. Method according to any of Claims 10 to 13, **characterized in that** the voltage branches are successively disconnected until a change in mathematical sign of the current (I1) is no longer detected.

15. Method according to Claim 14, **characterized in**

**that** a disconnected voltage branch is connected again if the mathematical sign of the current (I1) does not change after said voltage branch is disconnected.

16. Method according to Claim 15, **characterized in that** the disconnected voltage branch is connected again before the next voltage branch is disconnected.

17. Method according to any of Claims 10 to 16, **characterized in that** particular voltage branches are simultaneously disconnected and successively connected again.

18. Method according to any of Claims 10 to 17, **characterized in that** the entire electric system at the higher voltage (U2) is disconnected if the short-circuit is not located.

**Revendications**

1. Ensemble de détection de courts-circuits et de protection contre les surtensions entre deux niveaux de tension dans des réseaux de bord à deux tensions qui présentent différents niveaux de tension, un élément de commutation (S1-S3) étant disposé dans au moins une branche du réseau de bord au niveau de tension haut (U2) et au moins un dispositif de mesure en fonction duquel l'élément de commutation (S1-S3) peut être commuté étant disposé dans le réseau de bord au niveau de tension bas (U1), **caractérisé en ce que** le signe du courant (I1) qui s'écoule dans la branche des consommateurs peut être détecté au moyen du dispositif de mesure.

2. Ensemble selon la revendication 1, **caractérisé en ce que** le dispositif de mesure (M1) permet de mesurer le courant (I1).

3. Ensemble selon la revendication 1, comprenant un organe de découplage entre les deux réseaux de bord et au moins une source de tension (B1) au niveau de tension bas (U1) dans le réseau de bord, le signe du courant (I3) qui s'écoule depuis l'organe de découplage et celui du courant (I2) provenant de la source de tension pouvant être mesurés au moyen du dispositif de mesure.

4. Ensemble selon l'une des revendications précédentes, **caractérisé en ce que** dans toutes les branches non essentielles à la sécurité du réseau de bord, un élément de commutation (S1-S2) est disposé au niveau de tension haut (U2).

5. Ensemble selon l'une des revendications précédentes, **caractérisé en ce qu'**un élément central de commutation (S3) qui débranche le réseau de bord est disposé dans le réseau de bord au niveau de tension haut (U2).

6. Ensemble selon l'une des revendications précédentes, **caractérisé en ce que** l'organe de découplage est configuré comme convertisseur continu/continu (D1).

7. Ensemble selon l'une des revendications précédentes, **caractérisé en ce que** le dispositif de mesure (M1) ou un dispositif d'évaluation qui lui est associé sont raccordés par un conduit de commande séparé ou par un système de bus aux éléments de commutation (S1-S3).

8. Ensemble selon l'une des revendications précédentes, **caractérisé en ce que** les éléments de commutation (S1-S3) sont configurés comme éléments de commutation semi-conducteurs et/ou comme relais.

9. Ensemble selon l'une des revendications précédentes, **caractérisé en ce que** l'ensemble comporte de plus au moins une unité de mesure de tension.

10. Procédé de détection de courts-circuits et de protection contre les surtensions entre deux niveaux de tension dans des réseaux de bord à deux tensions qui présentent différents niveaux de tension, le procédé comprenant les étapes suivante :

   a) détermination du courant (I1) qui s'écoule dans les branches de consommateurs du réseau de bord au niveau de tension bas (U1),
   b) débranchement des branches de tension du réseau de bord à niveau de tension haut (U2) si le courant (I1) change de signe dans le réseau de bord à niveau de tension bas.

11. Procédé selon la revendication 10, **caractérisé en ce que** le niveau de l'intensité du courant et/ou la durée du changement de signe du courant (I1) sont pris en compte à titre d'autres critères de débranchement.

12. Procédé selon les revendications 10 ou 11, **caractérisé en ce que** le courant (I1) est mesuré.

13. Procédé selon les revendications 10 ou 11, **caractérisé en ce que** le courant (I2) provenant d'une source de tension (B1) et le courant (I3) provenant d'un organe de découplage entre les réseaux de bord sont mesurés.

14. Procédé selon l'une des revendications 10 à 13, **caractérisé en ce que** les branches de tension sont débranchées successivement jusqu'à ce qu'aucun changement de signe du courant (I1) ne soit plus détecté.

**15.** Procédé selon la revendication 14, **caractérisé en ce qu'**une branche de tension débranchée est de nouveau branchée au cas où après son débranchement, le signe du courant (I1) n'a pas changé.

**16.** Procédé selon la revendication 15, **caractérisé en ce que** la branche de tension débranchée est de nouveau branchée avant que la branche de tension suivante soit débranchée.

**17.** Procédé selon l'une des revendications 10 à 16, **caractérisé en ce que** certaines branches de tension sont débranchées simultanément et sont rebranchées successivement.

**18.** Procédé selon l'une des revendications 10 à 17, **caractérisé en ce qu'**en cas d'absence de localisation du court-circuit, l'ensemble du réseau de bord à haute tension (U2) est débranché.

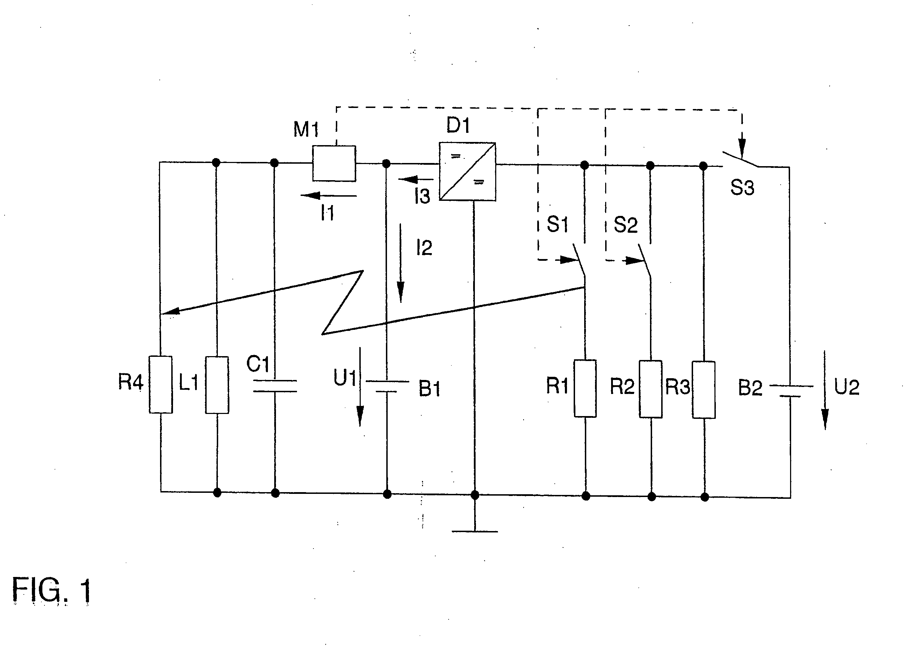

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19961435 A1